## Europäisches Patentamt
## European Patent Office
## Office européen des brevets

(19)

Veröffentlichungsnummer: **0 285 784**
**A1**

# EUROPÄISCHE PATENTANMELDUNG

(21) Anmeldenummer: **88102629.8**

(22) Anmeldetag: **23.02.88**

(51) Int. Cl.4 **G02B 6/38**

(30) Priorität: **31.03.87 DE 3710661**

(43) Veröffentlichungstag der Anmeldung:
**12.10.88 Patentblatt 88/41**

(84) Benannte Vertragsstaaten:
**AT BE CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Kayed, Jalal, Dr.**
**Heinrich-Marschner-Strasse 85**
**D-8011 Vaterstetten(DE)**

(54) **Lichtwellenleiterverbindung und Verfahren zu deren Herstellung.**

(57) Ein Lichtwellenleiter wird durch eine Presspassung, die durch Erwärmen einer metallischen Führungshülse (2) auf ca. 250° C, Plazierung der Leiterfaser (1) in der Führungshülse und anschließendes Abkühlen erzeugt wird, automatisch zentriert und befestigt. Erfindungsgemäß ist eine konzentrische Zwischenschicht (3) aus einem Fluorkunststoff zwischen Lichtwellenleiter und Führungshülse vorhanden, durch welche Temperatur-und Spannungsdifferenzen gedämpft werden.

Die in der optischen Nachrichtentechnik geforderten Maßgenauigkeiten werden dadurch bei gleichzeitiger Vereinfachung der Herstellung solcher Elemente gut erfüllt.

EP 0 285 784 A1

## Lichtwellenleiterverbindung und Verfahren zu deren Herstellung

Die Erfindung betrifft eine Lichtwellenleiterverbindung und ein Verfahren zu deren Herstellung.

An Verbindungen von Lichtwellenleitern, an feste sowie an steckbare, werden bezüglich der Ausrichtung und der Befestigung der Lichtwellenleiter innerhalb der meist metallischen Verbindungskörper bestimmte Qualitätsanforderungen gestellt. Unabhängig davon, ob Mono-oder Mulitmodephasern vorliegen, werden die Lichtwellenleiter in einen meistens mit Klebstoff gefüllten Metallzylinder eingeschoben, positioniert und anschließend durch Klebstoffaushärtung befestigt.

Wie aus der Patentschrift DE-25 16 858 hervorgeht, ist bekannt, einen Lichtwellenleiter in einem Verbindungselement in einer passgenau dimensionierten Bohrung zu führen und zu zentrieren und diesen mittels einer Klebung in dem Verbindungselement zu fixieren. Die hierbei eingesetzten Führungselemente, z.B. Führungshülsen, bestehen nach dem Stand der Technik aus einem Hartmetall, da die bei der Fertigung angesetzten Toleranzen, die im μm-Bereich liegen, über längere Zeit gewährleistet sein sollen.

Die Nachteile der beschriebenen Verbindungselemente liegen darin, daß z.B. jeder Klebstoff einem bestimmten Schrumpf unterliegt, wodurch Glasbruch, Lockerung des Lichtwellenleiters oder Versatz auftreten kann. Weitere Schwierigkeiten entstehen durch die unterschiedlichen Ausdehnungskoeffizienten der verschiedenen Materialien - Glas, Metall, Klebstoff. Zudem ist die Justierung und Montage, da passgenaue Bohrungen für die Lichtwellenleiter angefertigt werden müssen, sehr zeitaufwendig.

Der Erfindung liegt die Aufgabe zugrunde, eine Lichtwellenleiterverbindung zu schaffen, bei der Lichtwellenleiter in einer Bohrung einer Führungshülse einfach montiert und zuverlässig fixiert werden können.

Diese Aufgabe wird erfindungsgemäß dadurch gelöst, daß Lichtwellenleiter in eine konzentrisch den Lichtwellenleiter in der Führungshülse umgebende Schicht aus einem Fluorkunststoff eingebettet sind und durch eine Pressfassung in der Bohrung der Führungshülse befestigt und zentriert sind.

Die Zwischenschicht, die den Lichtwellenleiter von der Führungshülse trennt führt zur Dämpfung von Temperatur-und Spannungsunterschieden, die zwischen Führungshülsen und Lichtwellenleiter entstehen können. Somit wird vermieden, daß der Lichtwellenleiter aufgrund seiner spröden Werkstoffeigenschaften zu Schaden kommen kann, aber trotzdem durch die von außen durch die Führungshülse aufgebrachte Pressfassung fest sitzt und, durch die hohlzylinderförmige Ausbildung des Fluorkunststoffes, z.B. als Schlauch oder Rohr, gleichzeitig zentriert wird. Unter Pressfassung ist hier eine Preß-oder Schrumpfsitzverbindung zu verstehen. Ein direkter Kontakt zwischen metallischer Führungshülse und Lichtwellenleiter kommt aufgrund der Zwischenschicht aus Fluorkunststoff nicht zustande.

Eine vorteilhafte Ausgestaltung der Erfindung sieht vor, daß der Fluorkunststoff auf PTFE-Basis aufgebaut ist. Ein derartiges Material hat eine ausreichende Temperaturbeständigkeit, im Verhältnis zum Klebstoff gute Zugfestigkeitseigenschaften, eine hohe Dehnbarkeit, chemische Beständigkeit und kann mit erforderlichen Schicht-oder Wandstärken in niedrigen Fertigungstoleranzen hergestellt werden.

Das Material der Führungshülse muß nicht wie bisher aus hochwertigem und teueren Hartmetall bestehen, sondern kann aus relativ günstigem hochlegiertem Stahl, der zudem einfach bearbeitet werden kann, bestehen. Durch die Verwendung der Pressfassung wird von der Ausführung der Führungshülse keine derart hohe Maßgenauigkeit gefordert, so daß ein hochlegierter Stahl, der nicht den Härtegrad eines Hartmetalles aufweist, ausreicht.

Ein bevorzugtes Verfahren zur Herstellung einer erfindungsgemäßen Lichtwellenleiterverbindung ist im kennzeichnenden Teil des Anspruches 4 beschrieben.

Der Einsatz des Fluorkunststoffes kann als Ersatz der dem Stand der Technik nach eingesetzten Klebstoffe angesehen werden, wobei einerseits die Verwendung eines Schlauches aus Fluorkunststoff als Zwischenschicht zwischen Lichtwellenleiter und Führungshülse Voraussetzung zur Herstellung dieser Pressfassung ist und andererseits die für dieses Verfahren besonders guten Werkstoffeigenschaften des Fluorkunststoffes, insbesondere eines auf PTFE-Basis aufgebauten, eine einfache Herstellung und eine hohe Qualität der Lichtwellenleiterverbindung gewährleisten.

In dem im folgenden beschriebenen Ausführungsbeispiel wird eine Lichtwellenleiterverbindung skizziert, die die Lichtwellenleiter stirnseitig koppelt.

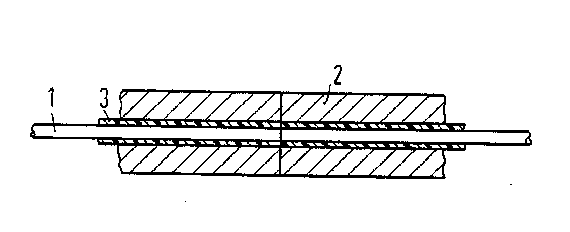

Die Figur zeigt einen Lichtwellenleiter 1, der, angedeutet durch die senkrechte Trennungslinie in der Mitte der Figur, durch parallele stirnseitige Zusammenführung von zwei Enden von Lichtwellenleitern, gekoppelt ist. Die Führungshülse 2 ist in diesem Fall auch in einen linken und in einen rechten Teil getrennt, was einer lösbaren Steckverbindung entspricht. Der Schlauch bzw. die Zwischenschicht aus Fluorkunststoff 3 ist ebenfalls, wie in der Zeichnung angedeutet in zwei Teile getrennt, die in der Mitte aneinanderstoßen. Hierbei ist zu bemerken, daß bei einer festen Lichtwellenleiterverbindung der Stoß der Fluorkunststoffschicht nicht an der Stelle sein muß, wo die Lichtwellenleiter aneinanderstoßen. Mit dem gleichen Aufbau, jedoch einer durchgehenden Führungshülse 2 und einem durchgehenden Schlauch, ist eine Spliceverbindung einfach herstellbar.

Die Figur beinhaltet lediglich die für die Erfindung wesentlichen Teile. Weitere mechanische Bauteile, wie Führungen oder Zugentlastungen und dergleichen sind nicht skizziert.

Die Vorgehensweise zur Herstellung einer erfindungsgemäßen Lichtwellenleiterverbindung ist wie folgt:

Die Faser des Lichtwellenleiters mit einem Innendurchmesser von ca. 125 μm wird in einen Fluorkunststoffschlauch mit einem Innendurchmesser von ca. 130 μm ± 5 μm soweit eingeschoben, wie es zur Befestigung im Innern der Führungshülse nötig ist. Das metallische Führungsrohr wird mit Hochfrequenz auf 200 bis 250° C erhitzt und dehnt sich um mehrere μm aus. Die Dimensionierung der drei Bauteile ist so vorzunehmen, daß der Außendurchmesser des Schlauches, der den Lichtwellenleiter beinhaltet, minimal kleiner ist, als der Innendurchmeser des erhitzten Führungsrohres. Der Lichtwellenleiter mit dem Fluorkunststoffschlauch wird in die Führungshülse eingeschoben, das Metall kühlt bis auf Raumtemperatur ab und sorgt so für eine Pressfassung, die den Lichtwellenleiter festhält. Die Abkühlung kann an Luft geschehen oder durch den Kontakt zwischen Führungshülse und einem anderen Metallkörper forciert werden. Hierbei ist von besonderem Vorteil, daß

-die engen Fertigungstoleranzen und die radialsymmetrische Ausbildung des Fluorkunststoffes für eine Zentrierung des Lichtwellenleiters sorgt.

- Die schlechten termischen Leiteigenschaften des Fluorkunststoffes den Lichtwellenleiter vor plötzlicher Erwärmung und somit vor Bruch - schützen.

- Der Fluorkunststoff sich bis zu 300 % dehnt und somit zu hohen Druck, der durch die Pressfassung vom Metall auf das Glas entstehen könnte, absorbiert oder abbaut.

Ein für dieses Verfahren einsetzbarer Fluorkunststoffschlauch ist z.B. bei der Firma Otto Pfenninger AG, CH-8712 Stäfa, erhältlich.
Die Materialeigenschaften und Abmessungen sehen wie folgt aus:

- Mikrominiaturschlauch, Innendurchmesser bis zu 100 μm lieferbar,

- Dünn-und Dickwandschläuche,

- Toleranzen im Durchmesser und in der Wandstärke bis maximal ± 5 μm,
- Temperaturbeständigkeit von -200 bis + 250° C,
- Zugfestigkeit von 15 bis 21 MPa (ca. das tausendfache eines Klebstoffes),
- Dehnung 200 bis 300 %,
- gute chemische Beständigkeit,
- somit keine Pilz-und Fäulnisbildung, keine Lösungsmittelbeeinflussung, nicht korrosiv,
- Wasseraufnahme kleiner als 0.1 %,
- unbrennbar.

## Ansprüche

1. Lichtwellenleiterverbindung, wobei Lichtwellenleiter (1), die sich in einer Bohrung einer Führungshülse (2) befinden, in eine konzentrisch den Lichtwellenleiter (1) in der Führungshülse (2) umgebende Schicht aus einem Fluorkunststoff (3) eingebettet sind und durch eine Preßfassung in der Bohrung der Führungshülse (2) befestigt und zentriert sind.

2. Lichtwellenleiterverbindung nach Anspruch 1,
**dadurch gekennzeichnet,**
daß der Fluorkunststoff (3) auf PTFE-Basis aufgebaut ist.

3. Lichtwellenleiterverbindung nach einem der vorhergehenden Ansprüche,
**dadurch gekennzeichnet,**
daß die Führungshülse (2) aus hochlegiertem Stahl besteht.

4. Verfahren zur Herstellung einer Lichtwellenleiterverbi dung nach einem der vorhergehenden Ansprüche,
**dadurch gekennzeichnet,**
daß
-mindestens ein Lichtwellenleiter (1) in einen Schlauch aus Fluorkunststoff (3) eingeschoben wird,
- eine Führungshülse (2) auf 200 bis 250° C erhitzt wird,
- der Lichtwellenleiter (1) mit dem Schlauch aus Fluorkunststoff (3) in die Bohrung der Führungshülse (2) eingeschoben wird und
- die Pressfassung durch das Schrumpfen bei der Abkühlung der Führungshülse (2) entsteht.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 588 227 (BICC) <br> * Figuren 1-5; Seite 1, Zeilen 19-88; Seite 2, Zeilen 86-30; Seite 3, Zeilen 1-14 * | 1 | G 02 B 6/38 |
| A | | 2,4 | |
| X | FR-A-2 443 074 (RAYCHEM) <br> * Figur 1; Seite 11, Zeilen 9-20; Seite 12, Zeilen 19-28; Seite 19, Zeilen 29-35 * | 1 | |
| A | | 2 | |
| X | GB-A-2 068 142 (PLESSEY) <br> * Insgesamt * | 1 | |
| A | | 2,4 | |
| X | FR-A-2 415 316 (AMP INC.) <br> * Figuren 1-3; Seite 2, Zeilen 12-38; Seite 3, Zeile 1 * | 1 | |
| A | | 2,4 | |
| A | DE-C-3 534 280 (SCHOTT) <br> * Figur 1; Spalte 1, Zeilen 54-57; Anspruch 1 * | 1,3 | **RECHERCHIERTE SACHGEBIETE (Int. Cl.4)** <br><br> G 02 B 6/00 |
| A | GB-A-2 038 015 (STC LTD) <br> * Zusammenfassung; Seite 1, Zeilen 105-128 * | 1,2 | |

Der vorliegende Recherchenbericht wurde für alle Patentansprüche erstellt

| Recherchenort | Abschlußdatum der Recherche | Prüfer |
|---|---|---|
| DEN HAAG | 07-07-1988 | MATHYSSEK K. |